# EUROPÄISCHE PATENTSCHRIFT

(11) **EP 1 149 381 B1**
(45) Veröffentlichungstag und Bekanntmachung des Hinweises auf die Patenterteilung: **24.09.2003**
(21) Anmeldenummer: 00901021.6
(22) Anmeldetag: 31.01.2000
(51) Int. Cl.: G11B 33/04

(54) **VERPACKUNGSHÜLLE FÜR EINEN SCHEIBENFÖRMIGEN GEGENSTAND, INSBESONDERE FÜR EINE CD**
PACKAGING CASE FOR A DISK-SHAPED OBJECT, PREFERABLY A CD
POCHETTE D'EMBALLAGE POUR UN OBJET EN FORME DE DISQUE, DE PREFERENCE UN DISQUE COMPACT

(30) Priorität: 01.02.1999 CH 18599
(43) Veröffentlichungstag der Anmeldung: 31.10.2001
(73) Patentinhaber: Zürmühle, Susan, 6353 Weggis (CH); Bächlin, Esther, 6353 Weggis (CH); Kramis, Kaspar, 6353 Weggis (CH); Nussbaumer, Mark, 6353 Weggis (CH)
(72) Erfinder: Zürmühle, Susan, 6353 Weggis (CH); Bächlin, Esther, 6353 Weggis (CH); Kramis, Kaspar, 6353 Weggis (CH); Nussbaumer, Mark, 6353 Weggis (CH)
(74) Vertreter: Luchs, Willi
(86) Internationale Anmeldenummer: CH0000048
(87) Internationale Veröffentlichungsnummer: WO00046806

(56) Entgegenhaltungen:
- WO-A-88/01974
- WO-A-93/21086
- DE-A- 4 215 902
- DE-A- 19 539 003
- DE-U- 29 505 432
- DE-U- 29 720 117
- US-A- 5 188 229
- US-A- 5 685 424

## Beschreibung

Die Erfindung betrifft eine Verpackungshülle nach dem Oberbegriff des Anspruches 1.

Bei einer Hülle nach der DE-U-297 20 117 ist ein im wesentlichen rechteckiges Blatt als falzbares Verpackungsmaterial vorgesehen, welches mit wenigstens zwei Längsfalzen und wenigstens zwei Querfalzen versehen ist. Das rechteckige Blatt ist mit einer nach aussen wegragenden Seitenlasche versehen, die über einen der "Längsfalze" mit dem rechteckigen Blatt verbunden ist und als eine Klebelasche ausgebildet ist, welche zum Verbinden der hier im Prinzip nur zwei vorhandenen länglichen Blattabschnitte vorgesehen ist. Einer dieser länglichen Blattabschnitte ist mit zwei Querfalzen versehen. Diese Klebelaschen erfordern zum einen ein aufwendiges Schneiden des Blattes und zum andern ist ein Verkleben beim Fertigstellen der Hülle notwendig. Die Ansprüche wurden gegen dieses Dokument abgegrenzt.

Bei einer bekannten Vorrichtung gemäss der Druckschrift DE-A-195 39 003 wird der Gegenstand in einen Innenteil gelegt und zusammen mit diesem in einer aus faltbarem Material hergestellten Hülle untergebracht. Dabei werden die zusammengefalteten Abschnitte miteinander verklebt oder anderwertig verbunden.

Bei der Hülle gemäss der Druckschrift WO-A-88/01974 wird ein im wesentlichen rechteckiges Blatt als Ausgangsmaterial verwendet, welches entsprechend aufwendig zugeschnitten oder ein besonderer Grundriss ausgestanzt werden muss, um die nach aussen wegragenden Laschen zu erzeugen. Die wegragenden Laschen erschweren das Bedrucken des Blattes.

Bei einer CD-Verpackung (US-A-5,188,229) ist das Blatt als Ausgangsmaterial nicht rechteckig. Ausserdem werden die zusammenfaltbaren Abschnitte miteinander verklebt oder in einer anderen Weise miteinander verbunden. Dabei ist das Zusammenfalten und Verbinden bei der Vielzahl von vorhandenen Abschnitten relativ kompliziert.

Ferner sind bei einer CD-Verpackung nach der Druckschrift WO-A-93/21086 an einem mit einer Schliesslasche versehenen Blatt zwei Längsfalzen für die zusammenzufaltende Hülle vorgesehen. Wiederum ist die nach aussen vorstehende Schliesslasche aufgrund ihrer speziellen Form relativ aufwendig in der Herstellung.

Bei einer Verpackung nach der Druckschrift DE-A-196 47 729 ist eine Präsentationsverpackung für scheibenförmige Datenträger beschrieben, bei welcher ein falzbares Material verwendet wird, bei dem es sich um Karton oder um ein anderes formbeständiges Material handeln soll. Dieses falzbare Material besteht aus einem langgestreckten Karton, aus beidseitig zu diesem wegragenden Seitenlaschen und aus Klebestreifen, welche an diesen Seitenlaschen vorstehend angeordnet sind. Dieser vorgefertigte, von Falzen zu einer Vielzahl von Abschnitten unterteilte Karton wird dann in relativ komplizierter Art und Weise gefaltet, bei den Klebestreifen geklebt und zu der fertigen Hülle zusammengesetzt. Die Bedruckung des langgestreckten Kartons dieser bekannten Präsentationsverpackung ist aufgrund des Formates nur in aufwendiger Arbeit realisierbar.

Des weiteren sind Verpackungshüllen bekannt, welche aus einem Kunststoff bestehen, bei denen jedoch häufig Defekte auftreten, so zum Beispiel, dass die Zentriernocken ausbrechen und die CD darin nicht mehr gehalten ist. Darüberhinaus sind diese Plastikhüllen nicht ökologisch hergestellt.

Der vorliegenden Erfindung wurde demgegenüber die Aufgabe zugrundegelegt, eine Verpackungshülle nach der eingangs erwähnten Gattung zu schaffen, mittels der eine einfache und äusserst ökologische Herstellung wie auch eine individuelle Ausgestaltung mit einer kostengünstigen Bedruckung ermöglicht wird.

Die Aufgabe ist erfindungsgemäss durch die Merkmale des Anspruches 1 gelöst.

Mit dieser erfindungsgemäss ausgebildeten Verpackungshülle ist eine ökologische Herstellung bei sehr einfach zu handhabender Faltung des Ausgangsmaterials bis zur Fertigstellung der Hülle geschaffen worden.

Als weiterer besonderer Vorteil lässt sich dieses als Blatt vorgesehene Verpackungsmaterial mit einem PC-Drucker oder dergleichen sehr kostengünstig bedrucken.

Ausführungsbeispiele der Erfindung sowie weitere Vorteile derselben sind nachfolgend anhand der Zeichnung näher erläutert. Es zeigt:
- Fig.1: zeigt eine perspektivische Darstellung einer erfindungsgemässen Verpackungshülle beim Zuklappen,
- Fig.2: eine Ansicht der Abwicklung der Verpackungshülle nach Fig.1,
- Fig.3: eine Ansicht einer Abwicklung einer Variante einer Verpakkungshülle mit Einlagen als Verstärkung,
- Fig.4: eine Ausführungsvariante einer Verpackungshülle als Abwicklung in Ansicht, bei welcher zwei Gegenstände versorgbar sind,
- Fig.5: eine Ansicht einer weiteren Variante einer abgewickelt veranschaulichter Verpackungshülle, und
- Fig.6: eine Ansicht einer anderen Variante einer Verpackungshülle.

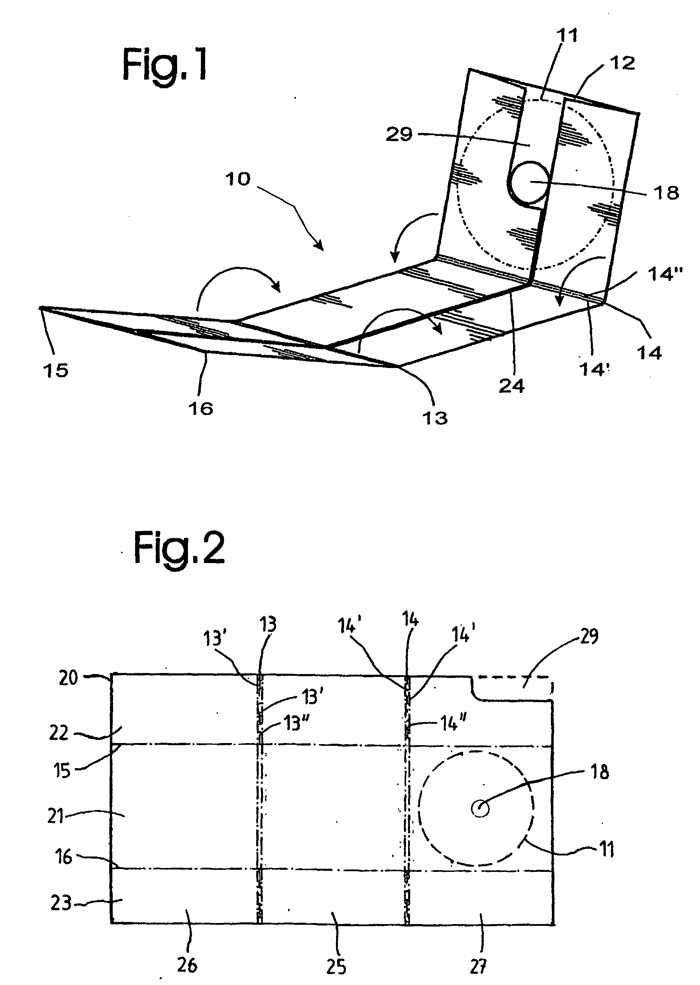

Fig.1 zeigt eine Verpackungshülle 10 für einen scheibenförmigen Gegenstand 11, der vorwiegend zur Aufnahme von Datenträgern, insbesondere von CDs, ausgelegt ist. Sie kann jedoch im Prinzip für jede Art von scheibenförmigen oder flachen Gegenständen verwendet werden. Bei CDs ergibt sich eine annähernd quadratische Form der geschlossenen Hülle. Sie kann aber auch andersförmig, wie beispielsweise rechteckig dimensioniert sein.

Erfindungsgemäss ist das Verpackungsmaterial aus einem im wesentlichen rechteckigen falzbaren Blatt 20 mit wenigstens zwei Längsfalzen 15, 16 und wenigstens zwei Querfalzen 13, 14 versehen, durch welche das Blatt 20 nach dem Falzen zu einer Tasche 12 für die Aufnahme des Gegenstandes 11 und zu einem Umschlag für ein von aussen verschlossenes Versorgen des Gegenstandes falzbar ist.

Gemäss Fig.2 ist das hierbei abgewickelt veranschaulichte Blatt 20 durch die sich über seine gesamte Länge erstreckenden Längsfalzen 15, 16 in einen Mittelbereich 21 und beidseitig zu diesem in je einen Längsabschnitt 22, 23 unterteilt. Vorliegend ist der eine Längsabschnitt 22 mit einer Ausnehmung 29 etwas breiter als der andere Längsabschnitt 23 ausgestaltet. Die Längsabschnitte 22, 23 sind in der gleichen Richtung nach innen gefaltet und sie bilden hierbei eine gegenseitige Stosskante 24. Im Prinzip können sie sich aber auch überlappen und gegebenenfalls zusammengeklebt werden. Im zusammengefalteten Zustand, wie dies aus Fig.1 ersichtlich ist, erstreckt sich die Ausnehmung 29 innenseitig bei der Tasche 12 von der Mitte bis an den Aussenrand der Tasche, durch welche der Gegenstand 11 einfacher in die Hülle 10 eingesetzt bzw. aus dieser herausgenommen werden kann. Dies ist noch dadurch verbessert, dass ausserdem eine runde Öffnung 18 in der Mitte der Tasche 12 vorgesehen ist.

Durch die beiden sich über die gesamte Breite des Blattes erstreckenden Querfalze 13, 14 sind drei annähernd gleich lange Abschnitte gebildet, die nach dem Zusammenfalten der beiden Längsabschnitte 22, 23 einen mittleren Rückenabschnitt 25, einen Aussenabschnitt 27 mit der gebildeten Tasche 12 für die Aufnahme des Gegenstandes 11 und einen gegenüberliegenden Aussenabschnitt 26 für die Abdeckung der Tasche 12 mit dem in diese eingeschobenen Gegenstand 11 bilden.

Zumindest den Querfalzen 13, 14 sind zwecks Bildung je eines schmalen Rückens jeweils zwei in einem geringen Abstand parallel zueinander angeordnete Einzelfalzen 13', 14' zugeordnet. Zumindest bei den beiden Längsabschnitten 22, 23 ist ausserdem je ein zwischen den Einzelfalzen verlaufender Mittelfalz 13", 14" vorgesehen. Dieser bietet den Vorteil, dass diese schmalen Rücken zwischen den Einzelfalzen 13', 14' leicht gekrümmt und somit optimal der sich im zusammengefalteten Zustand ergebenden Dicke angepasst werden können.

Für das faltbare Blatt 20 ist ein rechteckiges Papier- oder Kartonblatt mit einem gebräuchlichen Aussenformat verwendbar, das mit einem PC-Drucker bedruckbar ist. Es kann sich hierbei um ein DIN- oder ein US-Format handeln. Das Papier- oder Kartonblatt weist demnach mit Vorteil ein Gewicht zwischen 30 und 250 g/m² auf. Die Breite des Mittelbereiches 21 des Blattes, welcher durch die Längsfalzen 15, 16 begrenzt ist, entspricht annähernd dem Durchmesser des Gegenstandes 11. Der die Tasche 12 bildende Aussenabschnitt 27 ist vorteilhaft minim kürzer als der Rückenabschnitt 25 und der zu letzterem gleich lange Aussenabschnitt 26 bemessen. Damit kann dieser Abschnitt 27 gemäss Fig.1 vor dem andern auf den Rückenabschnitt 25 zugefaltet werden, ohne dass er mit seinem freien Ende bei dem Querfalz 13 anstehen würde. Anschliessend wird der als Abdeckung dienende Abschnitt 27 zugeschwenkt.

Dieses rechteckige Blatt 20 ist vorzugsweise im Ausgangszustand bereits mit den Längs- und Querfalzen und beim Abschnitt 27 an der äusseren Ecke mit einer oder beidseitig je einer symmetrischen vorgestanzten Ausnehmung und der Öffnung 18 versehen, so dass es paketweise verkauft werden kann und vom Endabnehmer einzig noch gegebenenfalls bedruckt, zu der fertigen Hülle 10 gefalzt und der Gegenstand 11 in die gebildete Tasche 12 eingeschoben werden muss.

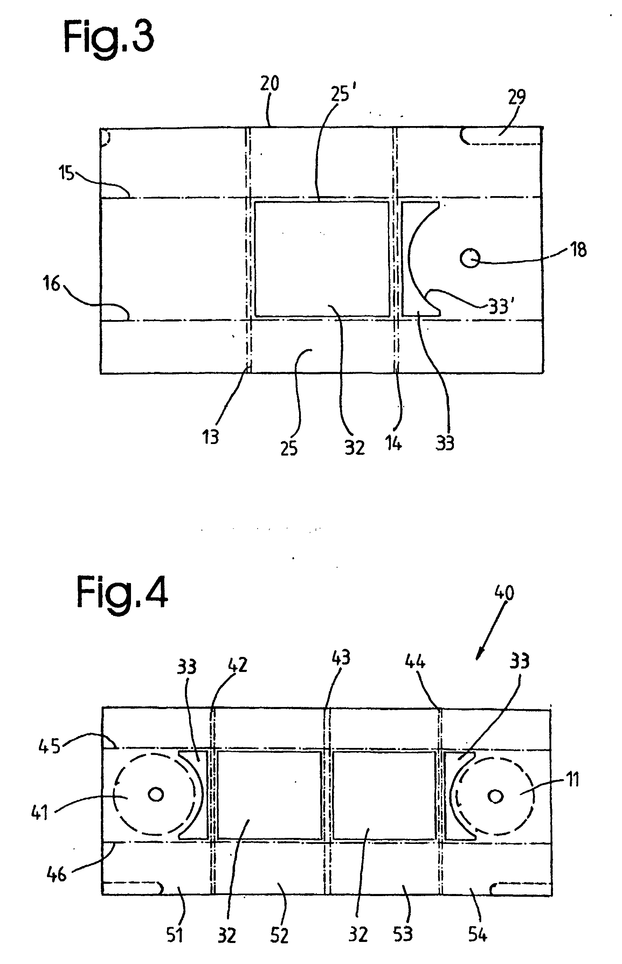

Gemäss Fig.3 ist das oben ausführlich erläuterte faltbare Blatt 20 durch eine oder - wie dargestellt - zwei Einlagen 32, 33 verstärkt. Die eine quadratische Einlage 32 weist annähernd eine Grösse wie der durch die Längs- und Querfalze 15, 16, 13, 14 begrenzte Rückenabschnitt 25' auf, derweil die andere Einlage 33 quasi als Anschlag für den Gegenstand 11 gebildet ist. Sie hat zu diesem Zwecke eine entsprechende gerundete Anschlagfläche 33'. Diese vorzugsweise aus Karton hergestellten Einlagen 32, 33 sind auf das Blatt aufklebbar und sie liegen im gefalteten Zustand im Innern des gefalteten Blattes.

Fig.4 zeigt eine abgewickelte Verpackungshülle 40, welche für die Aufnahme von zwei Gegenständen 11, 41, bspw. als Hülle für ein Doppelalbum, dient. Es sind nebst den beiden Längsfalzen 45, 46 drei Querfalze 42, 43, 44 vorgesehen, durch welche eine Unterteilung in vier Abschnitte 51, 52, 53, 54 gebildet ist. Die äusseren beiden sind als Taschen für die Aufnahme je eines Gegenstandes 11, 41 und die inneren beiden Abschnitte als Abdeckung der Gegenstände ausgestaltet. Ansonsten ist diese Verpackungshülle 40 gleich wie die oben erläuterte ausgebildet und es sind daher nurmehr die Unterschiede dargetan. Es sind wiederum Einlagen 32, 33 und Doppelfalze bei den Querfalzen vorgesehen.

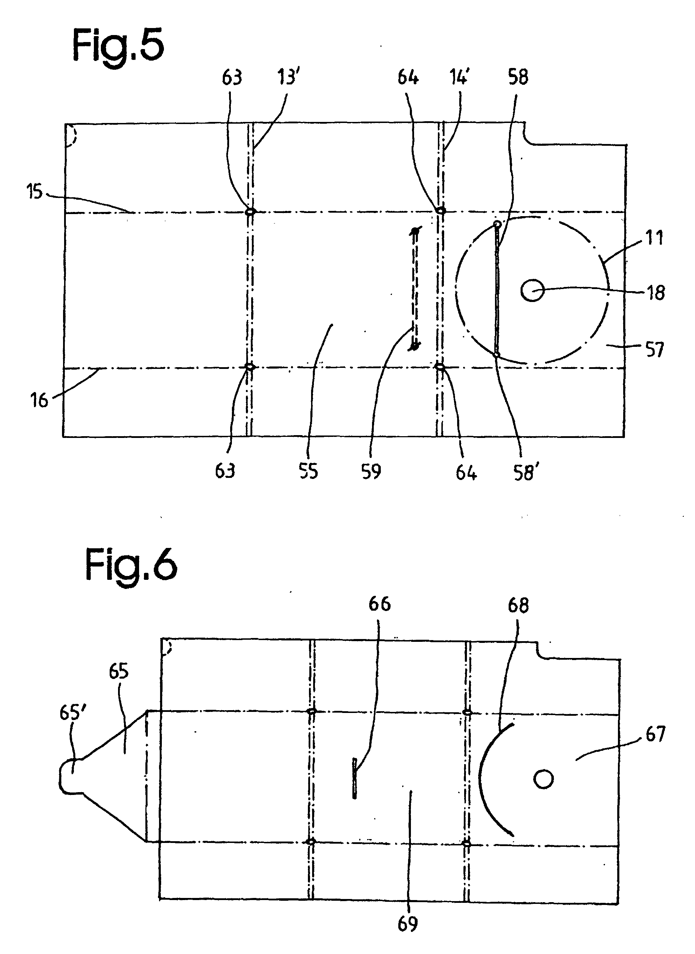

Fig.5 und Fig.6 zeigen je eine Variante einer Verpackungshülle, welche jeweils an sich von der Dimensionierung her gleich wie diejenige nach Fig.2 ausgebildet ist und daher nachfolgend nur noch deren Unterschiede erläutert sind.

Die Verpackungshülle nach Fig.5, von der die Innenseite sichtbar ist, ist in dem die Tasche bildenden Aussenabschnitt 57 mit einem definierten Aufnahmeschlitz 58 ausgestattet. Dieser Aufnahmeschlitz 58 ist parallel zu den Querfalzen 13', 14' im Bereich zwischen der mittleren Öffnung und dem den Aussenabschnitt 57 begrenzenden Querfalz 14' derart angeordnet, dass die Scheibe 11 in diesen Schlitz 58 teilweise einsteckbar und darin zentriert ist. Der als Anschlag der Scheibe dienende Aufnahmeschlitz 58 ist vorteilhaft beiden Endes mit einer Bohrung 58' im Millimeterbereich abgerundet, damit er an diesen Stellen nicht reisst. Ferner ist ein Verschlussmittel vorgesehen, welches als umschwenkbares Gummiband 59 auf der Aussenseite des Rückenabschnittes 55 angeordnet ist. Im zugeklappten Zustand der Hülle kann dieses Gummiband 59 um die eingeklappten Abschnitte umschlungen werden. Bei den sich kreuzenden Stellen der Längsfalzen 15, 16 mit den Querfalzen 13', 14' sind Schlitzbohrungen 63, 64 heraus gestanzt. Diese ermöglichen ein erleichtertes Falzen und in gefaltetem Zustand des Blattes, dass keine unerwünschten Faltkanten entstehen.

Gemäss Fig.6 ist der die Tasche 12 bildende Aussenabschnitt 67 des Blattes 20 mit einem den Gegenstand 11 zentrierenden Anschlag versehen, der durch eine Prägung 68 im Blatt 20 verwirklicht ist. Diese Prägung 68 ist als teilkreisförmige Bogenlinie vorgesehen, welche gegen innen vorstehend ist und demnach als Anschlag der Scheibe dient. Ferner ist wiederum ein Verschlussmittel der Hülle vorgesehen, welches als Lasche 65 und Aufnahmeschlitz 66 in entsprechender Anordnung vorhanden ist. Nach dem Zuklappen der Abschnitte kann die Lasche 65 mit ihrem Spitz 65' in diesen Schlitz 66 im Rückenabschnitt 69 eingeschoben werden.

Mit diesen Verpackungshüllen ergibt sich im Rahmen der Erfindung ein weiterer Vorteil darin, dass bei diesen im zugeklappten Zustand keine äussere Blattkante den Aussenumfang bildet, sondern nur gefaltete, gewissermassen verstärkte Aussenkanten vorliegen.

Die Erfindung ist mit den oben erläuterten Ausführungsbeispielen ausreichend dargetan. Sie liesse sich jedoch noch in anderen Varianten darstellen. So könnten zum Beispiel die Längsabschnitte überlappend und zusammengeklebt sein.

## Patentansprüche

1. Verpackungshülle für scheibenförmige Gegenstände, bestehend aus mindestens einem falzbaren Verpackungsmaterial, das ein mit wenigstens zwei Längsfalzen (15, 16; 45, 46) versehenes, im wesentlichen rechteckiges Blatt (20) umfasst, welches durch wenigstens zwei über die gesamte Breite des Blattes (20) sich erstreckende Querfalzen (13, 14; 42, 43, 44) in mindestens drei annähernd gleich lange Abschnitte (25, 26, 27; 51, 52, 53, 54) unterteilt ist, **dadurch gekennzeichnet, dass**
das Blatt (20) durch die Längsfalze (15, 16; 45, 46) über seine gesamte Länge in einen Mittelbereich (21) und zu diesem beidseitig angeordnete, in gleicher Richtung nach innen falzbare Längsabschnitte (22, 23) unterteilt ist, wobei der Gegenstand (11, 41) vom Aussenrand des Blattes (20) her in eine zwischen den zusammengefalteten Längsabschnitten (22, 23) und dem Mittelbereich (21) gebildete Tasche (12) in mindestens einen der Aussenabschnitte (27; 54, 51) einschiebbar und diese Tasche (12) durch Zusammenfalten aller Abschnitte (25, 26, 27; 51, 52, 53, 54) verschliessbar ist.

2. Verpackungshülle nach Anspruch 1, **dadurch gekennzeichnet, dass** drei annähernd gleich lange Abschnitte (25, 26, 27) durch zwei Querfalze (13, 14) gebildet sind, wobei der eine Aussenabschnitt (27) die Tasche (12) für die Aufnahme des Gegenstandes (11), der mittlere Abschnitt einen Rückenabschnitt (25) und der andere Aussenabschnitt (26) eine Abdeckung der Tasche (12) bilden.

3. Verpackungshülle nach Anspruch 1 oder 2, **dadurch gekennzeichnet, dass** den Querfalzen (13, 14) zwecks Bildung je eines schmalen Rückens jeweils zwei in einem geringen Abstand parallel zueinander angeordnete Einzelfalzen (13', 14') zugeordnet sind.

4. Verpackungshülle nach einem der Ansprüche 1 bis 3, **dadurch gekennzeichnet, dass** die beiden Längsabschnitte (22, 23) zusammen eine Breite aufweisen, die gleich oder grösser ist als die dem Durchmesser des Gegenstandes entsprechende und dabei das Einschieben des Gegenstandes in die Tasche (12) zulassende Breite des Mittelbereichs (21).

5. Verpackungshülle nach einem der Ansprüche 1 bis 4, **dadurch gekennzeichnet, dass** für das faltbare Blatt (20) ein rechteckiges Papieroder Kartonblatt mit einem gebräuchlichen Aussenformat verwendbar ist, das mit einem PC-Drucker bedruckbar ist, und ein Gewicht von 30 bis 250 g/m² aufweist.

6. Verpackungshülle nach einem der Ansprüche 2 bis 5, **dadurch gekennzeichnet, dass** die Längsabschnitte (22, 23) derart ausgebildet sind, dass im Bereich des die Tasche (12) für die Aufnahme des Gegenstandes (11) bildenden Aussenabschnittes (27) durch die zusammengefalteten Längsabschnitte (22, 23) eine sich von der Mitte des Aussenabschnittes (27) bis an den Aussenrand erstreckende Ausnehmung (29) gebildet ist, durch welche der Gegenstand (11) einfacher in die Tasche (12) bzw. aus dieser herausgenommen werden kann, und dass ausserdem im Bereich des Aussenabschnittes (27) der Mittelbereich (21) des Blattes (20) mit einer zentralen Öffnung (18) versehen ist.

7. Verpackungshülle nach einem der Ansprüche 1 bis 6, **dadurch gekennzeichnet, dass** das faltbare Blatt (20) durch eine oder mehrere Einlagen (32, 33) verstärkt ist.

8. Verpackungshülle nach Anspruch 1, **dadurch gekennzeichnet, dass** für die Aufnahme von zwei Gegenständen (11, 41) drei Querfalze (42, 43, 44) vorgesehen sind, durch welche eine Unterteilung in vier Abschnitte (51, 52, 53, 54) gebildet ist, von denen die äusseren beiden als Taschen (12) für die Aufnahme je eines Gegenstandes (11, 41) und die inneren beiden Abschnitte (52, 53) als Abdeckung der Gegenstände (11, 41) vorgesehen sind.

9. Verpackungshülle nach einem der Ansprüche 1 bis 8, **dadurch gekennzeichnet, dass** der die Tasche (12) bildende Aussenabschnitt (27, 57, 67) des Blattes (20) mit einem den Gegenstand (11) zentrierenden Anschlag versehen ist, der durch eine Einlage (33), einen Aufnahmeschlitz (58) oder eine Prägung (68) im Blatt (20) verwirklicht ist.

10. Verpackungshülle nach einem der Ansprüche 1 bis 9, **dadurch gekennzeichnet, dass** ein Verschlussmittel vorgesehen ist, welches als Lasche (65) und Aufnahmeschlitz (66), oder als umschwenkbares Gummiband (59) ausgebildet ist.

## Claims

1. Packaging case for disc-shaped objects, consisting of at least one foldable packaging material comprised of a substantially rectangular sheet (20) with at least two longitudinal folds (15, 16; 45, 46), subdivided into at least three sections (25, 26, 27; 51, 53, 54) of approximately the same length by at least two cross folds (13. 14; 42, 43, 44) extending over the whole width of the sheet (20), **characterised in that** the sheet (20) is subdivided by the longitudinal fold (15, 16; 45, 46) over its full length in a centre area (21) and the longitudinal sections (22, 23) arranged on both sides of it and foldable to the inside in the same direction, whereby the object (11, 41) can be slipped in from the outer edge of the sheet (20) into a pouch (12) formed in at least one of the outside sections (27; 54, 51) between the folded longitudinal sections (22, 23) and the centre area (21), and this pouch (12) is closable by folding all sections (25, 26, 27, 51, 52, 53, 54) together.

2. Packaging case according to claim 1, **characterised in that** three sections (25, 26, 27) of approximately the same length are formed by two cross folds (13, 14), whereby one outside section (27) forms the pouch (12) to receive the object (11), the centre section the back section (25) and the other outside section (26) forming a cover for the pouch (12).

3. Packaging case according to claim 1 or 2, **characterised in that** each two individual folds (13', 14') arranged at a small distance apart and parallel to each other, are associated with the cross folds (13, 14), to form a narrow back each.

4. Packaging case according to one of the claims 1 to 3, **characterised in that** the joint width of the two longitudinal sections (22, 23) is equal to or larger than the width of the centre area (21) consistent with the diameter of the object and at the same time allowing the object to be inserted into the pouch (12).

5. Packaging case according to one of the claims 1 to 4, **characterised in that** a rectangular sheet of paper or cardboard having the usual outside format and capable of being overprinted on a PC printer, and with a weight of between 30 and 250 g/sq.m, is used as the foldable sheet (20).

6. Packaging case according to one of the claims 2 to 5, **characterised in that** the longitudinal sections (22, 23) are so shaped that a recess (29) is formed by the longitudinal sections (22, 23) folded together in the centre of the outside section (27) up to the recess (29) extending up to the outer edge, in the area of the outer section (27) forming the pouch (12) for accommodating the object (11), through which the object (11) can be more easily slipped into or out of the pouch (12), and that the centre area (21) of the sheet (20) is also provided with a central opening (18) in the area of the outside section (27).

7. Packaging case according to one of the claims 1 to 6, **characterised in that** the foldable sheet (20) is reinforced with one or several inserts (32, 33).

8. Packaging case according to claim 1, **characterised in that** three cross folds (42, 43, 44) are provided to accommodate two objects (11, 41), the said three cross folds sub-dividing it into four sections (51, 52. 53, 54) of which the two outer are envisaged as pouches (12) to accommodate one object (11, 41) each and the two inner sections (52, 53) as covers for the objects (11, 41).

9. Packaging case according to one o the claims 1 to 6, **characterised in that** the outer section (27, 57, 67) of the sheet (20) forming the pouch (12) is provided with a stop centering the objects (11), formed by an insert (33), a locating slot (58) or an embossing (68) in the sheet.

10. Packaging case according to one of the claims 1 to 9, **characterised in that** locking means are provided in the form of a tongue (65) and a locating slot (66) or a rubber band (59) which can be pulled over the packaging case.

## Revendications

1. Pochette d'emballage pour des objets en forme de disque, constituée d'un moins un matériau d'emballage pliable, qui comprend une feuille (20) sensiblement rectangulaire, dotée d'au moins deux plis longitudinaux (15, 16 ; 45, 46), laquelle feuille est subdivisée, par au moins deux plis transversaux (13, 14 ; 42, 43, 44) s'étendant sur toute la largeur de la feuille (20), en au moins trois sections (25, 26, 27 ; 51, 52, 53, 54) présentant sensiblement la même longueur,
**caractérisée en ce que**
la feuille (20) est subdivisée, par les plis longitudinaux (15, 16 ; 45, 46) sur toute sa longueur, en une zone centrale (21) et en sections longitudinales (22, 23) disposées des deux côtés de celle-ci et pouvant être pliées vers l'intérieur dans la même direction, moyennant quoi l'objet (11, 41) peut être introduit, depuis le bord extérieur de la feuille (20), dans une poche (12) formée, entre les sections longitudinales (22, 23) repliées les unes sur les autres et la zone centrale (21) et dans au moins une des sections extérieures (27 ; 54, 51), et cette poche (12) peut être fermée en repliant les unes sur les autres toutes les sections (25, 26, 27 ; 51, 52, 53, 54).

2. Pochette d'emballage selon la revendication 1, **caractérisée en ce que** trois sections (25, 26, 27) présentant sensiblement la même longueur sont formées par deux plis transversaux (13, 14), moyennant quoi une section extérieure (27) constitue la poche (12) destinée à loger l'objet (11), la section centrale constitue une section de dos (25) et l'autre section extérieure (26) constitue un couvercle de la poche (12).

3. Pochette d'emballage selon la revendication 1 ou 2, **caractérisée en ce que**, aux plis transversaux (13, 14) sont affectés respectivement deux plis individuels (13', 14') parallèles l'un à l'autre avec un espacement réduit, en vue de former chaque fois un dos mince.

4. Pochette d'emballage selon l'une quelconque des revendications 1 à 3, **caractérisée en ce que** les deux sections longitudinales (22, 23) forment ensemble une largeur qui est supérieure ou égale à la largeur de la zone centrale (21) correspondant au diamètre de l'objet, et qui permet donc d'introduire l'objet dans la poche (12).

5. Pochette d'emballage selon l'une quelconque des revendications 1 à 4, **caractérisée en ce que**, pour la feuille pliable (20), on peut utiliser une feuille de papier ou de carton rectangulaire avec un format extérieur usuel, qui peut être imprimée avec une imprimante PC et qui a un poids compris entre 30 et 250 g/m².

6. Pochette d'emballage selon l'une quelconque des revendications 2 à 5, **caractérisée en ce que** les sections longitudinales (22, 23) sont conçues de telle sorte que, dans la zone de la section extérieure (27) formant la poche (12) destinée à loger l'objet (11), on forme par l'intermédiaire des sections longitudinales (22, 23) repliées les unes sur les autres, un évidement (29) s'étendant du centre de la section extérieure (27) jusqu'au niveau du bord extérieur, qui permet d'insérer et d'extraire plus facilement l'objet (11) dans / de la poche (12), et **en ce que**, en outre, dans la zone de la section extérieure (27), la zone centrale (21) de la feuille (20) est dotée d'une ouverture centrale (18).

7. Pochette d'emballage selon l'une quelconque des revendications 1 à 6, **caractérisée en ce que** la feuille pliable (20) est renforcée par un ou plusieurs éléments rapportés (32, 33).

8. Pochette d'emballage selon la revendication 1, **caractérisée en ce que**, pour loger deux objets (11, 41), on prévoit trois plis transversaux (42, 43, 44), qui permettent de réaliser une subdivision en quatre sections (51, 52, 53, 54), parmi lesquelles les deux sections situées le plus à l'extérieur sont configurées sous la forme de poches (12) pour loger chacune un objet (11, 41), et les sections situées le plus à l'intérieur (52, 53) sont configurées de manière à recouvrir les objets (11, 41).

9. Pochette d'emballage selon l'une quelconque des revendications 1 à 8, **caractérisée en ce que** la section extérieure (27, 57, 67) de la feuille, formant la poche (12), est dotée d'un taquet permettant de centrer l'objet (11), lequel taquet est réalisé dans la feuille par un élément rapporté (33), une fente de réception (58) ou un estampage (68).

10. Pochette d'emballage selon l'une quelconque des revendications 1 à 9, **caractérisée en ce qu'**on prévoit des moyens de fermeture, qui sont configurés sous la forme d'une languette (65) et d'une fente de réception (66), ou sous la forme d'une bande de caoutchouc (59) pouvant être orientée dans une autre direction.
